# EUROPEAN PATENT APPLICATION

(11) **EP 0 899 961 A1**
(43) Date of publication of application: **03.03.1999**
(21) Application number: 98306541.8
(22) Date of filing: 17.08.1998
(51) Int. Cl.: H04N 7/30

(54) **Pipelined processing for moving picture compression bit rate control**

(30) Priority: 25.08.1997 US 918234
(71) Applicant: TEKTRONIX, INC., Wilsonville, Oregon 97070-1000 (US)
(72) Inventor: McCormick, Robert A., Portland, Oregon 97225 (US)
(74) Representative: Molyneaux, Martyn William

(57) **Abstract**

A video compression process that involves pipelined processing for moving picture bit rate control reduces quantizer value variation by using a first pass compression engine which passes picture information to a transfer function. Using this information the transfer function establishes the quantizer value for a second pass compression encoder which compresses the same video image data as in the first pass. The desired bit rate is also adjusted according to the actual number of bits resulting from the second compression pass.

## Description

### Background of the Invention

The present invention relates to video compression techniques and more particularly to pipelined activity processing for moving picture compression bit rate control by establishing the quantizer value for a second pass compression engine from compressed video image data collected from a first compression pass in order to reduce apparent artifacts in the decoded moving picture sequence.

Moving picture compression algorithms involving block based transforms (e.g. discrete cosine transform or DCT), quantization (i.e. loss of precision), and subsequent lossless coding such as in the Moving Picture Expert Group (MPEG) and Motion-Joint Photographic Expert Group (Motion-JPEG) standards, are often targeted at constant bit rate or nearly constant bit rate applications. In order to achieve this, image quality is periodically adjusted by altering quantization. The period of adjustment can range from (1) block-to-block horizontally, (2) slice to slice vertically, (3) picture-to-picture or group-of-pictures to group-of-pictures temporally, or (4) a hybrid approach involving combinations of the above adjustment periods. Typically, a single pass algorithm provides feedback by using measures of generated code volume against a target volume to adjust the quantizer for either the current or future blocks. Previously coded blocks are left unaffected. The result of this single pass method results in "artifact noise" due to modulation of the quantizer that can be readily observed in the temporal domain.

Examples relative to the above quantizer adjustment periods include (1) quality differences in similar image content areas left-to-right resulting in "bit-shadow" cast horizontally, (2) quality differences in similar image content areas top-to-bottom producing a "window shade" or vertically cast bit shadow and (3) quality differences in similar image content from picture to picture resulting in higher temporal frequency noise such as "mosquito noise" or lower temporal frequency noise such as "pulsing". When complex hybrid bit rate control is employed the effects can be mixed and self-sustaining (oscillatory) well above visual thresholds. In actual algorithms with real-world video inputs that contain noise as well as image content changes (cuts), these effects rarely are spatially static. For example, the "bit window-shade" can appear to be moving up and down the screen from picture to picture within a sequence.

Techniques exist to reduce artifact motion for single pass bit rate methods. In general they result in either higher swings in the actual bit rate when trying to achieve higher overall quality or lower overall quality to achieve better regulation. These effects are increased when the compressed data is used in multiple generations of encoding or decoding, such as in a non-linear editing system or cascaded video transmission system, even at relatively high bit rates (e.g. > 15 Mbits/sec). This effect is due primarily to changes in the quantizer values from compression pass to compression pass.

What is desired is a video compression system that allows for a selection of quantizer values targeted at constant or nearly constant bit rate applications with the effect of reducing apparent artifacts in the subsequently decoded moving picture sequences.

### Summary of the Invention

Accordingly, the present invention provides pipelined activity processing for moving picture bit rate control by reducing quantizer value variation for similar image segments within an encoded moving picture sequence. It should be noted that in all cases a quantizer value does not represent a single value, but rather a matrix of values. The following method depends upon the matrix of values being scaled (linearly) by a single quantizer multiplier, heretofore referred to as a "quantizer value." The reduction in quantizer value variation is done by using a first pass compression engine which passes the picture information to a transfer function. Using this information the transfer function establishes the quantizer value for a second pass compression engine which compresses the same video image data as in the first pass. The desired bit rate is also adjusted according to the actual number of bits resulting from the second compression pass. This has the effect of reducing quantizer value variation in the compression of the video data for similar image segments within the encoded sequence.

The objects, advantages, and other novel features of the present invention are apparent from the following detailed description when read in conjunction with the appended claims and attached drawing.

### Brief Description of the Drawing

Fig. 1 is a system schematic of pipelined activity processing for moving picture compression bit rate control according to the present invention;
Fig. 2 is a diagram showing a timing sequence of actions using a single compression encoder according to the present invention.

### Description of the Preferred Embodiment

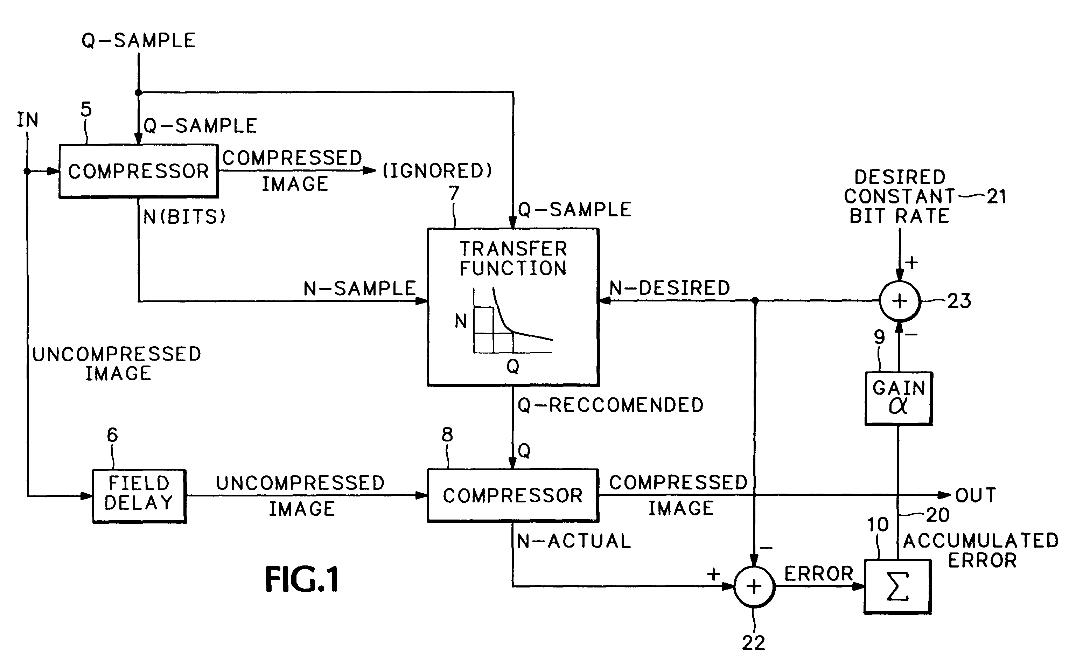

Referring to figure 1, uncompressed video image data is input to a first pass compression encoder **5**, along with a sample quantizer value. A JPEG engine may be used as the first pass compression encoder 5, and may be adjusted to use Huffman coding tables that are similar to the MPEG compression engine tables. However, an MPEG Intra-Frame coding engine may be used as the first pass compression engine, as well as any compression engine that would provide as output the number of bits resulting from the compression pass. The full image is compressed using the first pass compression encoder **5**. However, a sampled subset of the image may also be processed using the first pass compression encoder **5** because the compressed image output is ignored. This is done by taking a regular spatial subsample, such as checkerboarding or striping of pixels or pixel groups. The first pass compressor encoder **5** is coupled to a transfer function **7**, where the output number of bits from the first pass compression encoder, is input into the transfer function **7**. The sample quantizer value (Q-sample) is also input to the transfer function **7**. Before any image is compressed, an accumulated error output **20** is initialized to zero, and thus initially, the desired number of bits for a second compression pass (N-desired) is equal to the initial desired constant bit rate **21**. The desired number of bits for the second compression pass is then input to the transfer function **19.**

The transfer function **7**, compares the sample quantizer value used in the first pass compression (Q-sample) and the total number of bits resulting from that compression (N-sample), with the number of desired bits based on previous accumulated error (N-desired), and determines a quantizer value (Q-recommended) to be used in the second compression pass. The transfer function **7** is coupled to a second pass compression encoder **8** and the determined quantizer value (Q-recommended) is input to the second pass compression encoder, as well as the uncompressed video image data of the first pass via a delay buffer **6**. The delay buffer **6** in this embodiment may be increased in size to store multiple pictures, such as a Group of Pictures (GOP) sized N, enabling information to be collected in a pipeline over the entire GOP for use by the transfer function. The second pass compression encoder 8 used in this embodiment is an MPEG IPB (Intra and Inter Frame) compression encoder, but it is not necessary to use this specific encoder. The second pass compression encoder **8** therefore compresses video image data that contains the uncompressed video image data processed in the first pass. The resulting compressed image is output from the second pass compression encoder **8**.

The input (N-Desired) to the transfer function 7 for determining the quantizer value used in compression of a subsequent video image segment is set based on an error between the actual number of bits resulting from the second compression pass and the desired constant bit rate **21.** This is performed in the following manner. The second pass compression encoder **8** is coupled to a subtractor **22**. Input to the subtractor **22** is the actual number of bits (N-Actual) resulting from the second compression pass, and the desired number of bits resulting from the previous compressed image (N-Desired). The actual (N-Actual) is subtracted from the desired (N-Desired) to get an error. The error output from the subtractor **22** is accumulated in an accumulator **10.** This output is then input into a gain controller **9** that reduces the error by a percentage, say 50%, to avoid oscillation. The output of the gain controller **9** is input to a second subtractor **23** that also has as input the desired constant bit rate **21.** The second subtractor **23** subtracts the gain controlled error output from the desired constant bit rate **21**. This adjusted desired constant bit rate is then used as input for the number of bits desired in compression of a subsequent video image by inputting it to the transfer function **7** as the N-Desired parameter.

The transfer function continues in the cycle by determining a desired quantizer value (Q-recommended) at its output that results in a closer match between the number of bits desired (N-Desired), and the actual number of bits from the second compression encoder **8**. This is because the first pass compression encoder **5** provided the transfer function **7** with the actual number of bits resulting from compression using the sample quantizer. The transfer function **7** is adjusted according to the data from the first compression pass to provide a more accurate recommended quantizer value for a given desired constant bit rate. As the desired bit rate is adjusted according to the previous error, and a more accurate determination of the quantizer value results as output from the transfer function **7**, variations in the quantizer values for each similar image segment within the encoded sequence are decreased, thus reducing artifacts. Also, to reduce quantizer value variation, the set of allowable quantizer values that is recommended for the second pass compression encoder **8** may be restricted, so as to increase the possibility that the actual quantizer value exactly matches quantizer values for similar, identical, or previously coded (multi-generation) images.

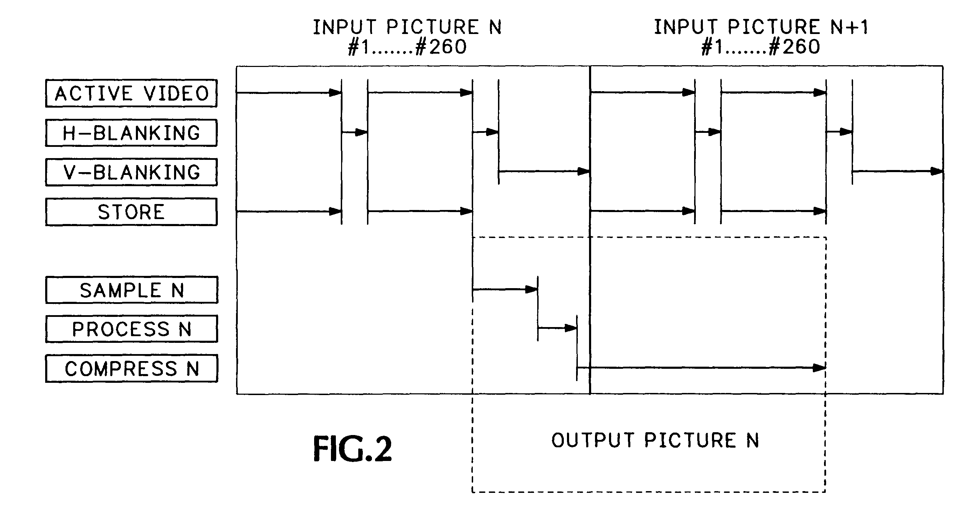

A single compression engine may be used to store the input image and perform the two compression passes by sampling a subset of the input image and taking advantage of the horizontal and vertical blanking time between active picture samples. Fig. 2 shows a representative sample of the horizontal and vertical blanking intervals between the active video portions of two input pictures N and N+1. The subset sample of input picture N is taken by selecting a regular spatial subsample of the input picture N, by way of checkerboarding or striping of pixels or pixel groups during the horizontal blanking interval after the last active video line, number 260 in this instance, of input picture N and during a portion of the vertical blanking period following said horizontal blanking interval. The processing, including the first pass compression of that sample and a quantizer adjustment based on that sample is completed during the remaining portion of the vertical blanking period between input pictures N and N+1 after the subsample is taken. The full second pass compression of input picture N is then completed during the normal time at which the compression encoder would compress the input picture N, which spans the active video and horizontal blanking intervals of the following input picture N+1.

Thus, the present invention provides pipelined activity processing for moving picture bit rate control by using a two-pass compression technique, a first intra-frame compression pass being used to determine quantizer values for a second intra-/inter-frame compression pass with feedback to reduce quantizer value variations for the second compression pass.

## Claims

1. A method for compressing digital video data, the method comprising the steps of:
performing a first compression pass of digital video data to obtain a number of bits resulting from the first compression pass;
determining a quantizer value for a second compression pass of the digital video data as a function of the number of bits resulting from the first compression pass and a desired bit rate;
performing a second compression pass of the digital video data by using the quantizer value to obtain compressed digital video data and an actual number of bits resulting from the second compression pass; and
updating the desired bit rate to determine the quantizer value for compression of subsequent digital video data as a function of the actual number of bits resulting from the second compression pass and a constant bit rate.

2. A method according to claim 1 wherein the first compression pass performing step comprises the step of:
compressing a sampled subset of the digital video data.

3. A method according to claim 1 wherein the first compression pass performing step comprises the step of:
compressing the digital video data using a JPEG compression encoder engine that is adjusted to use Huffman (coding) tables to compress the digital video data.

4. A method according to claim 1 wherein the first compression pass performing step comprises the step of:
compressing the digital video data using an MPEG Intra-Frame compression encoder to compress the digital video data.

5. A method according to claim 1 wherein the determining step comprises:
adjusting a transfer function for the digital video data based upon a sample quantizer value used in the first compression pass and the number of bits resulting from the first compression pass; and
outputting as the quantizer value for the second compression pass, from the adjusted transfer function, a reccomended quantizer value.

6. A method according to claim 1 wherein the determining step comprises:
restricting to a set of allowable quantizer values the quantizer value for the second compression pass.

7. A method according to claim 1 wherein the second compression pass performing step comprises the steps of:
inputting digital video data to a compression encoder delayed by a predetermined period;
inputting the quantizer value to the compression encoder;
outputting the actual number of bits resulting from compression of the digital video data by the compression encoder; and
outputting the compressed digital video data from the compression encoder.

8. A method according to claim 1 wherein the second compression pass performing step comprises the step of:
compressing the video image data by using the same compression encoder engine as was used in the first compression pass.

9. A method according to claim 8 wherein:
The first compression pass is performed during the horizontal and vertical blanking time between active picture samples.
